# EUROPÄISCHE PATENTSCHRIFT

(11) **EP 3 912 934 B1**
(45) Veröffentlichungstag und Bekanntmachung des Hinweises auf die Patenterteilung: **02.08.2023**
(21) Anmeldenummer: 21162855.7
(22) Anmeldetag: 16.03.2021
(51) Int. Cl.: B65G 45/12

(54) **ABSTREIFELEMENT FÜR EIN FÖRDERBAND**
STRIPPING ELEMENT FOR A CONVEYOR BELT
ÉLÉMENT DE DÉCAPAGE POUR UNE BANDE TRANSPORTEUSE

(30) Priorität: 20.05.2020 AT 5010620 U
(43) Veröffentlichungstag der Anmeldung: 24.11.2021
(73) Patentinhaber: Hoessl GmbH, 4210 Gallneukirchen (AT)
(72) Erfinder: Hoessl, Peter, 4040 Linz (AT)
(74) Vertreter: Hübscher & Partner Patentanwälte GmbH

(56) Entgegenhaltungen:
- EP-A1- 2 251 282
- EP-A2- 0 869 090
- DE-T2- 60 013 937
- DE-T2- 69 719 494
- DE-U1-202004 002 967
- DE-U1-202012 010 945

## Beschreibung

Stahlträger, auf dem eine Abstreifleiste aus gesintertem Hartmetall mittels einer Klebeschicht befestigt ist.

Um die Abstreifleiste aus gesintertem Hartmetall eines Abstreifelements für ein Förderband vorteilhaft mit dem sie aufnehmenden Stahlträger verbinden zu können, ist es bekannt, die Abstreifleiste mithilfe eines Silberlots auf den Stahlträger aufzulöten. Versuche, die teure Lötverbindung durch eine Klebeverbindung zu ersetzen, zeitigten jedoch nicht das angestrebte Ergebnis, weil mit herkömmlichen Klebeverbindungen nicht die für solche Abstreifelemente geforderte Standfestigkeit erreicht werden konnte, und zwar auch dann nicht, wenn die Abstreifleiste aus Hartmetall mit dem Stahlträger zusätzlich verschraubt wurde. DE 20 2004 002967 U1 offenbart ein Abstreifelement mit einem Träger, auf dem eine Abstreifleiste mittels einer Klebeschicht befestigt ist.

Der Erfindung liegt somit die Aufgabe zugrunde, eine Klebeverbindung zwischen der Abstreifleiste aus gesintertem Hartmetall und dem Stahlträger eines Abstreifelements für ein Förderband so auszugestalten, dass eine vorteilhafte Standfestigkeit der Verbindung gewährleistet werden kann, ohne einen zusätzlichen Aufwand zur Herstellung der Verbindung in Kauf nehmen zu müssen.

Ausgehend von einem Abstreifelement der eingangs geschilderten Art löst die Erfindung die gestellte Aufgabe dadurch, dass die Abstreifleiste auf ihrer dem Stahlträger zugekehrten Seite eine in Längsrichtung durchgehende, hinterschnittene Aufnahmenut bildet, in die der Stahlträger unter Ausbildung eines die Klebeschicht aufnehmenden Klebespalts formschlüssig eingreift.

Durch die formschlüssige Aufnahme des Stahlträgers in der den Klebebereich vorgebenden Aufnahmenut der Abstreifleiste werden die quer zur Abstreifleiste wirkenden Kräfte auf den Stahlträger übertragen, ohne die Klebeverbindung übermäßig zu beanspruchen. Über die Klebeverbindung müssen im Wesentlichen nur die in Längsrichtung der Abstreifleiste wirksamen Belastungen der Abstreifleiste auf den Stahlträger abgetragen werden. Da beim Abstreifvorgang jedoch die Abstreifleiste insbesondere quer zu Längsrichtung belastet wird, wird durch die erfindungsgemäße Maßnahme eine Klebeverbindung sichergestellt, die allen bei solchen Abstreifelementen gegebenen Anforderungen gerecht werden kann. Das Vorsehen einer hinterschnittenen Aufnahmenut bedeutet für die Fertigung der Abstreifleiste aus gesintertem Hartmetall keinen entscheidenden Mehraufwand, weil beim Formpressen des für die Herstellung der Abstreifleiste eingesetzten Hartmetall-Sinterpulvers zu einem Sinterkörper diese Aufnahmenut mitgeformt wird. Eine nur schwierig durchführbare Nachbearbeitung der Aufnahmenut kann ja entfallen, weil die Fertigungstoleranzen durch den Klebespalt ausgeglichen werden.

Besonders vorteilhafte Konstruktionsverhältnisse ergeben sich, wenn der Längsrandabschnitt der Abstreifleiste auf der einer Schabkante gegenüberliegenden Seite der Aufnahmenut die Stirnflächen von auf dieser Seite am Stahlträger festgeschraubten Stützarmen abdeckt, die den Stahlträger mit einer Trägerwelle verbinden. Die stirnseitige Abdeckung dieser Stützarme durch einen Längsrandabschnitt der Abstreifleiste aus Hartmetall schützt die Stützarme vor einem Verschleiß durch das von der Abstreifleiste vom Förderband gelöste Material.

In der Zeichnung ist der Erfindungsgegenstand beispielsweise dargestellt. Es zeigen
- Fig. 1: ein erfindungsgemäßes Abstreifelement eines Abstreifers in einer Ansicht in Längsrichtung der Abstreifleiste und
- Fig. 2: die mit dem Stahlträger durch eine Klebeschicht verbundene Abstreifleiste im Querschnitt in einem größeren Maßstab.

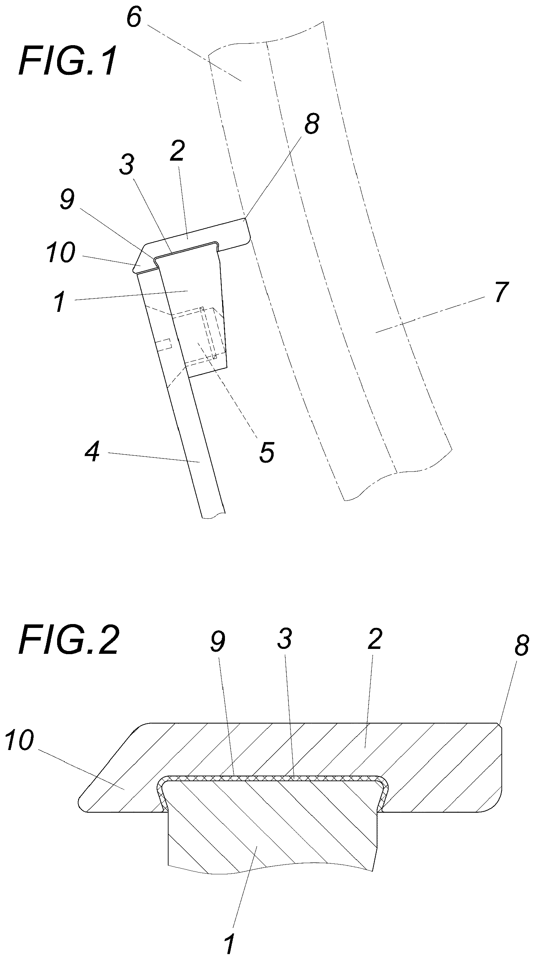

Ein erfindungsgemäßes Abstreifelement weist einen Stahlträger 1 und eine den Stahlträger 1 abdeckende Abstreifleiste 2 aus gesintertem Hartmetall auf, die mit dem Stahlträger 1 durch eine Klebeschicht 3 verbunden ist. Wie aus der Fig. 1 ersichtlich ist, sind die Stahlträger 1 an Stützarmen 4 mithilfe von Schrauben 5 befestigt. Die einzelnen nebeneinandergereihten Abstreifelemente sind jeweils für sich durch die Stützarme 4 auf einer Tragwelle gelagert, mit der die Abstreifelemente federnd an ein Förderband 6 im Bereich einer Umlenkrolle 7 angedrückt werden. Die Abstreifleisten 2 der einzelnen Abstreifelemente ergänzen sich zu einer über die Bandbreite durchgehenden Schableiste, sodass mithilfe der Schabkante 8 der einzelnen Abstreifleisten 2 das Förderband 6 über seine Breite entsprechend gereinigt werden kann.

Wie insbesondere aus der Fig. 2 hervorgeht, bildet die Abstreifleiste 2 jedes Abstreifelements auf ihrer dem Stahlträger 1 zugekehrten Seite eine in Längsrichtung durchgehende, hinterschnittene Aufnahmenut 9, in die der Stahlträger 1 unter Ausbildung eines Klebespalts eingreift, der mit der Klebeschicht 3 ausgefüllt ist, sodass sich zwischen der Abstreifleiste 2 aus gesintertem Hartmetall und dem Stahlträger 1 über die Klebeschicht 3 eine form- und kraftschlüssige Verbindung ergibt, die den beim Reinigen eines Förderbands 6 auftretenden Belastungen vorteilhaft genügt. Die im Wesentlichen quer zur Abstreifleiste 2 auftretenden Hauptbelastungen der Abstreifelemente werden ja über den Formschluss des in die hinterschnittene Aufnahmenut 9 eingreifenden Stahlträgers 1 von der Abstreifleiste 2 auf den Stahlträger 1 übertragen, ohne die Haftvermittlung der Klebeschicht 3 zwischen Abstreifleiste 2 und Stahlträger 1 besonders zu beanspruchen. Die Klebeverbindung zwischen der Abstreifleiste 2 und dem Stahlträger 1 kommt ja vor allem dann zur Wirkung, wenn es gilt, in Längsrichtung wirksame Belastungen der Abstreifleiste 2 auf den Stahlträger abzutragen. Diese Belastungen können durch die Klebeschicht 3 ohne Weiteres aufgenommen werden, weil diese Belastungen vergleichsweise gering ausfallen.

Die Abstreifleisten 2 aus Hartmetall sind derart ausgebildet, dass ihr Längsrandabschnitt 10 auf der der Schabkante 8 gegenüberliegenden Seite der Aufnahmenut 9 die Stirnseite der an den Stahlträgern 1 angeschraubten Stützarme 4 abdeckt, wie dies der Fig. 1 entnommen werden kann. Durch diese Maßnahme wird sichergestellt, dass die Stützarme 4 vor einem Verschleiß durch das mithilfe der Abstreifleisten 2 vom Förderband 6 gelöste Material weitgehend geschützt werden.

## Patentansprüche

1. Abstreifelement für ein Förderband (6), mit einem Stahlträger (1), auf dem eine Abstreifleiste (2) aus gesintertem Hartmetall mittels einer Klebeschicht (3) befestigt ist, wobei die Abstreifleiste (2) auf ihrer dem Stahlträger (1) zugekehrten Seite eine in Längsrichtung durchgehende, hinterschnittene Aufnahmenut (9) bildet, in die der Stahlträger (1) unter Ausbildung eines die Klebeschicht (3) aufnehmenden Klebespalts formschlüssig eingreift.

2. Abstreifelement nach Anspruch 1, **dadurch gekennzeichnet, dass** der Längsrandabschnitt (10) der Abstreifleiste (2) auf der einer Schabkante (8) gegenüberliegenden Seite der Aufnahmenut (9) die Stirnflächen von auf dieser Seite am Stahlträger (1) festgeschraubten Stützarmen (4) abdeckt, die den Stahlträger (1) mit einer Trägerwelle verbinden.

## Claims

1. Stripping element for a conveyor belt (6), having a steel bearer (1) on which a stripping band (2) made of sintered hard metal is fastened by means of an adhesive layer (3), wherein, on its side facing the steel bearer (1), the stripping band (2) forms an undercut receiving groove (9) which is continuous in the longitudinal direction and into which the steel bearer (1) engages in a form-fitting manner, forming an adhesive gap receiving the adhesive layer (3).

2. Stripping element as claimed in claim 1, **characterised in that** the longitudinal edge portion (10) of the stripping band (2), on the side of the receiving groove (9) opposite a scraping edge (8), covers the end faces of support arms (4) fixedly screwed to the steel bearer (1) on this side, which support arms connect the steel bearer (1) to a support shaft.

## Revendications

1. Elément décolleur destiné à une bande de convoyage (6), avec un support en acier (1) sur lequel une lame de décollage (2) en métal dur inoxydable est fixée au moyen d'une couche de colle (3), laquelle lame de décollage (2) forme sur son côté tourné vers le support en acier (1) une rainure de réception (9) en contre-dépouille traversant dans le sens longitudinal dans laquelle le support en acier (1) pénètre en constituant par ajustement de forme un interstice de collage recueillant la couche de colle (3).

2. Elément décolleur selon la revendication 1, **caractérisé en ce que** la section de bord longitudinale (10) de la lame de décollage (2) recouvre sur le côté de la rainure de réception (9) opposé à un bord de raclage (8) les faces frontales de bras de support (4) fixés par vissage sur ce côté au support en acier (1) qui relient le support en acier (1) avec un arbre porteur.
